# EUROPÄISCHE PATENTANMELDUNG

(11) **EP 3 967 720 A1**
(43) Veröffentlichungstag der Anmeldung: **16.03.2022**
(21) Anmeldenummer: 20195221.5
(22) Anmeldetag: 09.09.2020
(51) Int. Cl.: C08K 3/04, C08L 63/00, C08J 5/00, C08J 7/04, C09D 4/00

(54) **VERFAHREN ZUR HERSTELLUNG EINES VORPRODUKTS FÜR EINE ABLEITFÄHIGE BESCHICHTUNGSZUSAMMENSETZUNG, INSBESONDERE ZUR BESCHICHTUNG VON BODENFLÄCHEN, SOWIE ABLEITFÄHIGE BESCHICHTUNG ERHALTEN GEMÄSS DEM VERFAHREN**

(71) Anmelder: DAW SE, 64372 Ober-Ramstadt (DE)
(72) Erfinder: NICKEL, Oliver, 64372 Ober-Ramstadt (DE); RICHTERICH, Anna, 64372 Ober-Ramstadt (DE); ZEIN, Alexander, 64372 Ober-Ramstadt (DE); BAINDL, Andreas, 64372 Ober-Ramstadt (DE)
(74) Vertreter: Metten, Karl-Heinz

(57) **Zusammenfassung**

Die vorliegende Erfindung betrifft ein Verfahren zur Herstellung eines Vorprodukts für eine Beschichtungszusammensetzung, umfassend das Vermischen von Epoxidharz und einwandigen Kohlenstoffnanoröhrchen mit einem Dissolver unter Einsatz einer Dissolverscheibe sowie das Vermischen der so erhaltenen Mischung mit einer weiteren Menge an Epoxidharz unter Einsatz einer Dissolverscheibe. Ferner betrifft die Erfindung ein Verfahren zur Herstellung einer Beschichtungszusammensetzung, umfassend das Vermischen von dem nach dem erfindungsgemäßen Verfahren erhaltenen Vorprodukt mit einem Härter. Außerdem betrifft die Erfindung ein Verfahren zur Herstellung einer Beschichtung, umfassend das Auftragen der nach dem erfindungsgemäßen Verfahren erhaltenen Beschichtungszusammensetzung auf eine Substratoberfläche. Schließlich betrifft die Erfindung eine Beschichtung erhalten gemäß dem erfindungsgemäßen Verfahren.

## Beschreibung

Die vorliegende Erfindung betrifft ein Verfahren zur Herstellung eines Vorprodukts für eine ableitfähige Beschichtungszusammensetzung, insbesondere für eine Beschichtungszusammensetzung zur Beschichtung von Bodenflächen, umfassend mindestens ein Epoxidharz und einwandige Kohlenstoffnanoröhrchen sowie eine ableitfähige Beschichtung erhalten gemäß dem erfindungsgemäßen Verfahren.

Elektrostatische Auf- und Entladungen treten nahezu überall auf. Für Personen können diese ab einem Wert von etwa 10 kV zu gesundheitlichen Problemen, wie Kopfschmerzen, Übelkeit oder Taubheitsgefühlen führen, bei höheren Werten im schlimmsten Fall sogar zu Atemlähmung oder einem Herzstillstand. Doch auch in insbesondere explosionsgeschützten Bereichen können elektrostatische Auf- und Entladungen Brände, insbesondere im Zusammenhang von brennbaren Flüssigkeiten oder Gasen, oder Explosionen, insbesondere in Kombination mit trockenem Schüttgut, zur Folge haben. Auch elektronische Bauelemente sind besonders anfällig für Schäden hervorgerufen durch elektrostatische Entladung.

Vor allem bei senkrecht zur Schwerkraft ausgerichteten Oberflächen, wie beispielsweise Gebäudeoberflächen, insbesondere Bodenbelägen, kann das natürliche elektrische Feld der Erde beachtliche Werte annehmen, was bei Reibung, wie beispielsweise beim Laufen über diese Bodenbeläge ohne Sicherheitsschuhe, zu einer enormen Aufladung führen kann.

Demnach besteht ein großer Bedarf an ESD ("ElectroStatic Discharge")-Schutz zur Vermeidung bzw. Minimierung unvermeidbarer Aufladungen, wie beispielsweise Ableiten oder Erdung. ESD-Bodenbeläge besitzen ausreichende Leitfähigkeit, wobei in der Praxis meist Fußböden mit einem Ableitwiderstand von etwa 1 MΩ zum Einsatz kommen. Je nach Anwendung können die Bodenbeläge mit einer leitfähigen Schicht in Form von Platten, Rollware, Beschichtungen oder Lackierungen ausgestattet werden. Aufgrund ihrer minimalen Schichtstärke sind vor allem Beschichtungen vielseitig einsetzbar, die leitfähige Komponenten enthalten, um den Bodenbelag ableitfähig zu machen.

Als leitfähige Komponenten in der Herstellung von Beschichtungszusammensetzungen sind ionische Flüssigkeiten aus dem Stand der Technik bekannt. Diese weisen jedoch den Nachteil auf, dass ihre Leitfähigkeit in dem vollständig ausgehärteten Endprodukt, der Beschichtung, immens abnimmt. Weiterhin ist die Leitfähigkeit der eingearbeiteten ionischen Flüssigkeiten stark von der relativen Luftfeuchtigkeit in der Umgebung bzw. dem jeweiligen Raumklima abhängig, was deren Wirksamkeit schwer vorhersagbar macht. Weiterhin hat sich gezeigt, dass diese ionischen Flüssigkeiten, insbesondere durch die Reinigung der Böden, nach und nach ausgewaschen werden.

Alternative leitfähige Komponenten stellen auf Ruß, Kohlenstofffasern und/oder leitfähige Füllstoffe, wie Siliciumcarbide oder Schichtsilikate ab. Vor allem Kohlenstoffnanoröhrchen (CNT) und besonders einwandige Kohlenstoffnanoröhrchen (SWCNT) kommen aufgrund ihrer geringen Dichte und hohen Zugfestigkeit immer mehr zum Einsatz. Gerade im Hinblick auf die ESD-Anforderungen bestechen sie durch ihre hohe Strombelastbarkeit und Wärmeleitfähigkeit. Diese alternativen leitfähigen Komponenten zeigen demgemäß Vorteile gegenüber ionischen Flüssigkeiten, weisen jedoch einen großen Nachteil auf: Die genannten Verbindungen besitzen allesamt eine intensive dunkle, grau bis schwarze, Eigenfarbe, was deren Einsatz in Bodenbeschichtungen auf dunkle Beschichtungen beschränkt.

Inzwischen gibt es einige Ansätze, Systeme zu entwickeln, welche die vorangehenden Nachteile umgehen sollen.

So offenbart die EP 3 670 470 A1 Beschichtungszusammensetzungen zur Beschichtung von Bodenflächen, umfassend ein organisches Bindemittel, Füllstoffe und/oder Pigmente und funktionale Fasern, wie beispielsweise SWCNT, wobei die Füllstoffe und/oder Pigmente eine Rohdichte größer 3,8 kg/dm³ und die funktionalen Fasern eine Rohdichte zwischen 1,0 kg/dm³ und 2,0 kg/dm³ aufzuweisen haben.

Die RU 2 654 759 C1 beschreibt einen Bodenbelag enthaltend härtbares Harz in Form eines Epoxidharzes und einen Füllstoff in Form einwandiger Kohlenstoff-Nanoröhren in einer Menge von 0,001 bis 0,5 Gew.-%.

Die aus dem Stand der Technik bekannten Systeme sind demnach noch stets mit Nachteilen behaftet.

Der vorliegenden Erfindung lag daher die Aufgabe zugrunde, die Nachteile des Stands der Technik zu überwinden und insbesondere ein effizientes und kostengünstiges Verfahren zur Herstellung von Beschichtungszusammensetzungen bereitzustellen, welches Beschichtungen mit dauerhaft guten Ableitfähigkeiten liefert.

Demgemäß wurde ein Verfahren zur Herstellung eines Vorprodukts für eine Beschichtungszusammensetzung, insbesondere für eine Beschichtungszusammensetzung zur Beschichtung von Bodenflächen, gefunden, umfassend die Schritte:
a) Zurverfügungstellung einer ersten Menge an mindestens einem Epoxidharz,
b) Zurverfügungstellung einer Menge an einwandigen Kohlenstoffnanoröhrchen (auch SWCNT genannt),
c) Zurverfügungstellung eines Mischbehälters mit einem Durchmesser D und gegebenenfalls eines weiteren Mischbehälters mit einem Durchmesser D,
d) Zurverfügungstellung eines Dissolvers mit einer Dissolverscheibe mit einem Durchmesser d,
e) Zusammengeben eines ersten Teils der ersten Menge an dem mindestens einen Epoxidharz gemäß a) und der Menge an einwandigen Kohlenstoffnanoröhrchen gemäß b) in dem Mischbehälter gemäß c) und Mischen der Komponenten a) und b), insbesondere Homogenisieren der Mischung enthaltend die Komponenten a) und b), mit dem Dissolver gemäß d) unter Einsatz der Dissolverscheibe in dem Mischbehälter gemäß c), insbesondere für eine Dauer im Bereich von 4,0 bis 6,0 min, besonders bevorzugt im Bereich von 4,5 bis 5,5 min, wobei der Durchmesser der Dissolverscheibe d = 9/16 bis 15/16, insbesondere 5/8 bis 7/8, des Durchmessers D des Mischbehälters beträgt und wobei die Dissolverscheibe eine Drehzahl im Bereich von 8 bis 18 m/s, bevorzugt im Bereich von 10 bis 16 m/s und besonders bevorzugt im Bereich von 11 bis 15 m/s, aufweist,
f) Zusammengeben der gemäß Schritt e) erhaltenen Mischung und des verbliebenen Teils der ersten Menge an dem mindestens einen Epoxidharz gemäß a) in dem Mischbehälter gemäß c), in dem die Mischung gemäß e) vorliegt, oder in dem weiteren Mischbehälter gemäß c) und Mischen der gemäß Schritt e) erhaltenen Mischung und des verbliebenen Teils der ersten Menge an dem mindestens einen Epoxidharz gemäß a), insbesondere Homogenisieren der Mischung enthaltend die gemäß Schritt e) erhaltene Mischung und den verbliebenen Teil der ersten Menge an dem mindestens einen Epoxidharz gemäß a), mit dem Dissolver gemäß d) unter Einsatz der Dissolverscheibe in dem Mischbehälter gemäß c) bzw. in dem weiteren Mischbehälter gemäß c), insbesondere für eine Dauer im Bereich von 4,0 bis 6,0 min, besonders bevorzugt im Bereich von 4,5 bis 5,5 min, wobei der Durchmesser der Dissolverscheibe d = 9/16 bis 15/16, insbesondere 5/8 bis 7/8, des Durchmessers D des Mischbehälters beträgt und wobei die Dissolverscheibe eine Drehzahl im Bereich von 8 bis 18 m/s, bevorzugt im Bereich von 10 bis 16 m/s und besonders bevorzugt im Bereich von 11 bis 15 m/s, aufweist, und
g) Isolieren der gemäß Schritt f) erhaltenen Mischung.

Mit dem Verfahren gelangt man letztendlich zu Beschichtungszusammensetzungen wie auch zu ableitfähigen Beschichtungen, in denen die einwandigen Kohlenstoffnanoröhrchen (SWCNT) sehr gleichmäßig eingearbeitet sind bzw. sehr gleichmäßig verteilt vorliegen. Die erhaltenen Beschichtungen zeichnen sich auch dadurch aus, dass sie nach der Aushärtung ihre volle Funktionsfähigkeit dauerhaft beibehalten. Ferner werden mithilfe des erfindungsgemäßen Verfahrens letztendlich ausgehärtete Beschichtungen zugänglich, die trotz der intensiv dunklen Eigenfarbe der einwandigen Kohlenstoffnanoröhrchen eine hohe Farbtonvielfalt, insbesondere auch im Bereich der hellen Farbtöne, zulassen.

In einer zweckmäßigen Ausgestaltung kann man der gemäß Schritt e) und/oder der gemäß Schritt f) erhaltenen Mischung Fasern zugeben, beispielsweise Polyolefinfasern wie Polyethylenfasern. Bezogen auf das Gewicht der gemäß Schritt f) erhaltenen Mischung können in einer zweckmäßigen Ausgestaltung bis zu 3 Gewichtsprozent an derartigen Fasern eingemischt werden. Hierdurch erhält man eine strukturierte Oberfläche.

Unter einem "Dissolver" im Sinne der vorliegenden Erfindung werden bevorzugt Scheibenrührer verstanden. Ein Dissolver gemäß der vorliegenden Erfindung kann aber auch jeglicher schnellaufende mechanische Rührer mit rotatorischer Wirkbewegung sein, wie beispieslweise ein Propellerriihrer, ein Schrägblattrührer, ein Taumelscheibenriihrer, ein Hollowbladerührer, ein Impellerrührer, ein Kreuzbalkenrührer, ein Ankerrührer, ein Blattrührer, ein Gitterrührer, ein Wendelrührer oder ein Zahnscheibenrührer. Dabei kann der Dissolver Glas, Kunststoff oder Metall umfassen, bevorzugt umfasst dieser jedoch Edelstahl.

In einer zweckmäßigen Ausgestaltung des erfindungsgemäßen Verfahrens liegen die einwandigen Kohlenstoffnanoröhrchen in Schritt b) in Form einer Suspension in einem Lösungsmittel vor bzw. werden in Form dieser Lösungsmittel-Suspension in Schritt e) eingesetzt. Bevorzugt handelt es sich dabei um eine Suspension in einem aprotischen polaren Lösungsmittel, wobei besonders Propylenglykol eine sehr gute Suspendierbarkeit der einwandigen Kohlenstoffnanoröhrchen zeigt.

Es hat sich dabei als vorteilhaft erwiesen, wenn die vorliegenden bzw. eingesetzten einwandigen Kohlenstoffnanoröhrchen gemäß b) über eine durchschnittliche Länge, insbesondere absolute Länge, im Bereich von 1 bis 50 µm verfügen. Besonders gut geeignet sind einwandigen Kohlenstoffnanoröhrchen mit einer durchschnittlichen Länge, insbesondere einer absoluten Länge, im Bereich von 2 bis 40 µm.

Ebenso sind solche einwandigen Kohlenstoffnanoröhrchen gemäß Schritt b) zweckmäßig, die über einen durchschnittlichen Durchmesser, insbesondere einen absoluten Durchmesser von weniger als 10 nm verfügen. In einer bevorzugten Ausgestaltung der erfindungsgemäßen Beschichtungsmasse und deren Herstellung weisen die einwandigen Kohlenstoffnanoröhrchen einen durchschnittlichen Durchmesser, insbesondere einen absoluten Durchmesser von weniger als 6 nm und besonders bevorzugt im Bereich von 0,2 bis 5 nm auf.

In einer zweckmäßigen Ausgestaltung verfügen die einwandigen Kohlenstoffnanoröhrchen gemäß b) über eine Dichte im Bereich von 1,0 bis 2,0 g/cm³, insbesondere im Bereich von 1,3 bis 1,4 g/cm³.

Das mindestens eine Epoxidharz der ersten Menge an Epoxidharz gemäß a) umfasst insbesondere ein, vorzugsweise flüssiges, Bisphenol A Epoxidharz oder stellt dieses dar. In einer bevorzugten Ausführungsform des erfindungsgemäßen Verfahrens stellt der erste Teil der ersten Menge an dem mindestens einen Epoxidharz gemäß a) eine Menge im Bereich von 30 bis 70 Gew.-%, bevorzugt 40 bis 60 Gew.-%, der ersten Menge an dem mindestens einen Epoxidharz gemäß a) dar. Alternativ oder zusätzlich, bevorzugt zusätzlich, stellt der verbliebene Teil der ersten Menge an dem mindestens einen Epoxidharz gemäß a) eine Menge im Bereich von 30 bis 70 Gew.-%, bevorzugt 40 bis 60 Gew.-%, der ersten Menge an dem mindestens einen Epoxidharz gemäß a) dar.

Zur leichteren Herstellung einer homogenen Beschichtungszusammensetzung hat es sich als vorteilhaft erwiesen, wenn die Dissolverscheibe in Schritt e) in die in dem Mischbehälter gemäß c) vorliegende Mischung aus dem Epoxidharz gemäß a) und der Menge an einwandigen Kohlenstoffnanoröhrchen gemäß b) eingeführt wird. Es ist ebenfalls vorteilhaft, wenn während des Mischens gemäß Schritt e) ein Teil der Mischung aus den Komponenten a) und b) dem Mischbehälter gemäß c) entnommen und anschließend, vollständig oder in Teilen, wieder zu der im Mischbehälter verbliebenen Menge an Mischung aus den Komponenten a) und b) vor Beendigung des Mischens zugegeben wird. Auf diese Weise gelangt man zu einer noch gleichmäßigeren Verteilung der Komponenten der Beschichtungszusammensetzung.

In einer besonders geeigneten Ausführungsform des erfindungsgemäßen Verfahrens umfasst dies ferner die folgenden Schritte:
h) Zurverfügungstellung einer zweiten Menge an mindestens einem Epoxidharz,
i) Vermischen, insbesondere homogenisierendes Vermischen, des Epoxidharzes gemäß h) mit mindestens einem Netz- und Dispergiermittel und mindestens einem Pigment und/oder mindestens einem Füllstoff, insbesondere mindestens ein Pigment, sowie gegebenenfalls mindestens einem Koaleszensmittel, mindestens einen Reaktivverdünner und/oder mindestens einem Additiv, insbesondere mindestens einem Entschäumer, insbesondere mit einem Dissolver unter Einsatz einer Dissolverscheibe, in einem Mischbehälter, insbesondere für eine Dauer im Bereich von 10,0 bis 20,0 min, besonders bevorzugt im Bereich von 12,0 bis 17,0 min.
j) das Vermengen der Mischung erhalten gemäß Schritt f) oder g) mit der Mischung erhalten gemäß Schritt h) in einem Mischbehälter und Mischen der Mischung erhalten gemäß Schritt f) oder g) mit der Mischung erhalten gemäß Schritt h), insbesondere Homogenisieren der Mischung enthaltend die Mischung erhalten gemäß Schritt f) oder g) mit der Mischung erhalten gemäß Schritt h), mit einem Dissolver unter Einsatz einer Dissolverscheibe in dem Mischbehälter, insbesondere für eine Dauer im Bereich von 6,0 bis 14,0 min, besonders bevorzugt im Bereich von 8,0 bis 12,0 min, wobei die Dissolverscheibe eine Drehzahl im Bereich von 1 bis 8 m/s, bevorzugt im Bereich von 2 bis 6 m/s und besonders bevorzugt im Bereich von 3 bis 5 m/s, aufweist, und
k) gegebenenfalls Isolieren der gemäß Schritt j) erhaltenen Mischung.

Dabei hat es sich als vorteilhaft erwiesen, wenn die Mischung erhalten gemäß Schritt f) oder g) zu der in dem Mischbehälter vorliegenden Mischung erhalten gemäß Schritt h) gegeben wird. Weiterhin ist es von Vorteil, wenn sich bei der Zugabe der Mischung erhalten gemäß Schritt f) oder g) zu der in dem Mischbehälter vorliegenden Mischung erhalten gemäß Schritt h) die Dissolverscheibe des Dissolvers nicht dreht. Das Drehen setzt dann erst nach erfolgter Zugabe ein.

In einer besonders zweckmäßigen Ausgestaltung des erfindungsgemäßen Verfahrens umfasst auch das mindestens eine Epoxidharz der zweiten Menge an Epoxidharz gemäß h) ein, insbesondere flüssiges, Bisphenol A Epoxidharz oder stellt dieses dar.

Besonders bevorzugt sind auch erfindungsgemäße Verfahren, die weiterhin die folgenden Schritte umfassen:
l) Zurverfügungstellung einer dritten Menge an mindestens einem Epoxidharz und
m) Zusammengeben der dritten Menge an dem mindestens einen Epoxidharz gemäß 1) mit der Mischung erhalten gemäß Schritt j) oder k) in einem Mischbehälter und Mischen der dritten Menge an dem mindestens einen Epoxidharz gemäß 1) und der Mischung erhalten gemäß Schritt j) oder k), insbesondere Homogenisieren der Mischung enthaltend die dritte Menge an dem mindestens einen Epoxidharz gemäß 1) und die Mischung erhalten gemäß Schritt j) oder k), mit einem Dissolver unter Einsatz einer Dissolverscheibe in dem Mischbehälter, insbesondere für eine Dauer im Bereich von 6,0 bis 14,0 min, besonders bevorzugt im Bereich von 8,0 bis 12,0 min, wobei die Dissolverscheibe eine Drehzahl im Bereich von 0,5 bis 6 m/s, bevorzugt im Bereich von 1 bis 5 m/s und besonders bevorzugt im Bereich von 2 bis 4 m/s, aufweist, und
n) Isolieren der gemäß Schritt m) erhaltenen Mischung.

Im Falle des mindestens einen Epoxidharzes der dritten Menge an Epoxidharz gemäß 1) hat es sich als zweckmäßig erwiesen, dass dieses ein, insbesondere flüssiges, Bisphenol F Epoxidharz umfasst oder darstellt.

Hinsichtlich der Epoxidharze sind solche erfindungsgemäßen Verfahren zur Herstellung erfindungsgemäßer Beschichtungszusammensetzungen besonders geeignet, bei denen 75 bis 95 Gew.-%, bevorzugt 80 bis 90 Gew.-%, Bisphenol A Epoxidharz gemäß a) und/oder h) und 5 bis 25 Gew.-%, bevorzugt 10 bis 20 Gew.-%, Bisphenol F Epoxidharz gemäß 1), jeweils bezogen auf die Gesamtmenge Bisphenol A Epoxidharz und Bisphenol F Epoxidharz, eingesetzt werden.

Eine besonders gleichmäßige Verteilung der Komponenten und eine damit einhergehende homogene Mischung kann auch dadurch erreicht werden, dass in bevorzugten Ausgestaltungen des erfindungsgemäßen Verfahrens in Schritt m) ebenfalls mindestens ein Koaleszensmittel und/oder mindestens ein Reaktivverdünner in die Mischung eingearbeitet wird.

Auch während des Mischens in Schritt m) ist es von Vorteil, wenn ein Teil der Mischung dem Mischbehälter entnommen und anschließend, vollständig oder in Teilen, wieder zu der im Mischbehälter verbliebenen Menge an der Mischung vor Beendigung des Mischens wieder zugegeben wird.

Die der Erfindung zugrunde liegende Aufgabe wird weiterhin gelöst durch ein Verfahren zur Herstellung einer Beschichtungszusammensetzung, insbesondere einer Beschichtungszusammensetzung zur Beschichtung von Bodenflächen, umfassend die Schritte
1) Zurverfügungstellung einer Mischung erhalten gemäß Schritt j), k) oder n), insbesondere n), des erfindungsgemäßen Verfahrens, insbesondere wie vorangehend geschildert,
2) Zurverfügungstellung eines Härters, insbesondere eines Amin-Härters, und
3) Mischen der Komponenten 1) und 2) unter Ausbildung einer Beschichtungszusammensetzung.

Dabei wird die Beschichtungszusammensetzung gemäß Schritt 3) des erfindungsgemäßen Verfahrens vorteilhafter Weise auf eine Substratoberfläche unter Ausbildung eines Schichtauftrags aufgetragen und ausgehärtet. Mit den nach dem erfindungsgemäßen Verfahren zugänglichen Beschichtungszusammensetzungen gelangt man häufig sogar zu selbstnivellierenden Schichtaufträgen.

Die der Erfindung zugrunde liegende Aufgabe wird ferner gelöst durch eine Beschichtung, insbesondere erhalten gemäß dem erfindungsgemäßen Verfahren, bevorzugt wie vorangehend geschildert, aufweisend
i) einen Helligkeitswert im Bereich von 1 bis 80, bevorzugt im Bereich von 3 bis 70 und besonders bevorzugt im Bereich von 5 bis 60, bestimmt gemäß Farbtonmessung nach CIELab, und/oder
ii) einen Erdableitwiderstand (Leitfähigkeit) Rg < 10⁹ Ω und eine Personenaufladung (maximal erzeugte Körperspannung) < 100 V, bestimmt gemäß DIN EN 61340-5-1 (VDE 0300-5-1):2017-07, und/oder, insbesondere und,

Dabei sind insbesondere auch solche erfindungsgemäßen Beschichtungen besonders bevorzugt, die alternativ oder zusätzlich, insbesondere zusätzlich iii) einen Gehalt an einwandigen Kohlenstoffnanoröhrchen im Bereich von 1x10⁻³ bis 5x10⁻² Gew.-%, inbesondere im Bereich von 3x10⁻³ bis 2,5x10⁻² Gew.-%, bevorzugt im Bereich von 4x10⁻³ bis 1,5 x10⁻² Gew.-% und besonders bevorzugt im Bereich von 5x10⁻³ bis 9x10⁻³ Gew.-%, bezogen auf das Gesamtgewicht der Beschichtung, aufweisen. Mit derartigen Gehalten an einwandigen Kohlenstoffnanoröhrchen gelangt man einerseits besonders gut und zuverlässig zu Beschichtungszusammensetzungen, die selbstnivellierend sind, und andererseits zu Beschichtungen in die sich durch eine hinreichende Leitfähigkeit auszeichnen.

Dabei weisen besonders zweckmäßige erfindungsgemäße Beschichtungen eine Schichtstärke im Bereich von 0,5 bis 2,0 mm auf.

Für die Farbtonmessung nach CIELab kann auf die Publikation von Herrn Tasso Bräule (2012), "Coloristik für Lackanwendungen" (S. 32ff), Hannover, Deutschland, Vincentz Network, zurückgegriffen werden. Im Übrigen ist dem Fachmann die Bestimmung von CIELab-Werten geläufig.

Mit dem erfindungsgemäß hergestellten Vorprodukten bzw. mit dem erfindungsgemäß hergestellten Beschichtungszusammensetzung sind elektrisch ableitfähige Bodenbeschichtungen zugänglich, die ohne weiteres für explosionsgefährdete Bereiche, z.B. solche gemäß DIN EN 1801:1999-02, für Bereiche mit Personenschutz gegen elektrischen Schlag, insbesondere nach DIN VDE 0100-600:2017-06, für Bereiche mit Schutzanforderung gegenüber elektronischen Bauteilen, insbesondere nach DIN EN 61340-5-1:2017-07 und DIN EN 61340-4-5: 2019-04.

Mit dem erfindungsgemäßen Verfahren zur Herstellung eines Vorprodukts für eine ableitfähige Beschichtungszusammensetzung, insbesondere für eine ableitfähige Beschichtungszusammensetzung zur Beschichtung von Bodenflächen sowie die daraus erhaltenen ableitfähigen Beschichtungen geht die überraschende Erkenntnis einher, dass ableitfähige Beschichtungen umfassend einwandige Kohlenstoffnanoröhrchen effizient und kostengünstig hergestellt werden können, wobei das erfindungsgemäße Herstellungsverfahren eine gleichmäßige Verteilung der einwandigen Kohlenstoffnanoröhrchen in der Beschichtung ermöglicht und deren Funktionsfähigkeit, insbesondere bei der Trocknung und Härtung der Beschichtungszusammensetzung, erhalten bleibt. Weiterhin werden überraschenderweise Beschichtungen in einer hohen Farbtonvielfalt, insbesondere in hellen Farbtönen, erhalten, trotz der intensiv dunklen Eigenfarbe der einwandigen Kohlenstoffnanoröhrchen. Beispielsweise sind mit den erfindungsgemäßen Beschichtungen Farbtöne herstellbar bzw. umsetzbar, die heller als der Farbton RAL 7035 Lichtgrau sind, beispielsweise mit Hellbezugswerten von 60 und darüber. Gleichzeitig gelangt man völlig unproblematisch auch zu Beschichtungen mit sehr dunklem Farbton, zum Beispiel sogar dunkler als RAL 8022 Schwarzbraun, z.B. mit einem Hellbezugswert von 5 oder auch darunter. Außerdem zeichnen sich die erfindungsgemäßen Beschichtungen dadurch aus, dass sie sehr dauerhaft leitfähig sind, und zwar unabhängig von der Alterung und vom Raumklima. Von besonderem Vorteil ist auch, dass die für ableitfähige Beschichtungen maßgeblichen Normen regelmäßig unabhängig von den klimatischen Umgebungsbedingungen erfüllt werden.

Die in der voranstehenden Beschreibung und den Ansprüchen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Verfahren zur Herstellung eines Vorprodukts für eine Beschichtungszusammensetzung, insbesondere für eine Beschichtungszusammensetzung zur Beschichtung von Bodenflächen, umfassend die Schritte
a) Zurverfügungstellung einer ersten Menge an mindestens einem Epoxidharz,
b) Zurverfügungstellung einer Menge an einwandigen Kohlenstoffnanoröhrchen (auch SWCNT genannt),
c) Zurverfügungstellung eines Mischbehälters mit einem Durchmesser D und gegebenenfalls eines weiteren Mischbehälters mit einem Durchmesser D,
d) Zurverfügungstellung eines Dissolvers mit einer Dissolverscheibe mit einem Durchmesser d,
e) Zusammengeben eines ersten Teils der ersten Menge an dem mindestens einen Epoxidharz gemäß a) und der Menge an einwandigen Kohlenstoffnanoröhrchen gemäß b) in dem Mischbehälter gemäß c) und Mischen der Komponenten a) und b), insbesondere Homogenisieren der Mischung enthaltend die Komponenten a) und b), mit dem Dissolver gemäß d) unter Einsatz der Dissolverscheibe in dem Mischbehälter gemäß c), insbesondere für eine Dauer im Bereich von 4,0 bis 6,0 min, besonders bevorzugt im Bereich von 4,5 bis 5,5 min, wobei der Durchmesser der Dissolverscheibe d = 9/16 bis 15/16, insbesondere 5/8 bis 7/8, des Durchmessers D des Mischbehälters beträgt und wobei die Dissolverscheibe eine Drehzahl im Bereich von 8 bis 18 m/s, bevorzugt im Bereich von 10 bis 16 m/s und besonders bevorzugt im Bereich von 11 bis 15 m/s, aufweist,
f) Zusammengeben der gemäß Schritt e) erhaltenen Mischung und des verbliebenen Teils der ersten Menge an dem mindestens einen Epoxidharz gemäß a) in dem Mischbehälter gemäß c), in dem die Mischung gemäß e) vorliegt, oder in dem weiteren Mischbehälter gemäß c) und Mischen der gemäß Schritt e) erhaltenen Mischung und des verbliebenen Teils der ersten Menge an dem mindestens einen Epoxidharz gemäß a), insbesondere Homogenisieren der Mischung enthaltend die gemäß Schritt e) erhaltene Mischung und den verbliebenen Teil der ersten Menge an dem mindestens einen Epoxidharz gemäß a), mit dem Dissolver gemäß d) unter Einsatz der Dissolverscheibe in dem Mischbehälter gemäß c) bzw. in dem weiteren Mischbehälter gemäß c), insbesondere für eine Dauer im Bereich von 4,0 bis 6,0 min, besonders bevorzugt im Bereich von 4,5 bis 5,5 min, wobei der Durchmesser der Dissolverscheibe d = 9/16 bis 15/16, insbesondere 5/8 bis 7/8, des Durchmessers D des Mischbehälters beträgt und wobei die Dissolverscheibe eine Drehzahl im Bereich von 8 bis 18 m/s, bevorzugt im Bereich von 10 bis 16 m/s und besonders bevorzugt im Bereich von 11 bis 15 m/s, aufweist, und
g) Isolieren der gemäß Schritt f) erhaltenen Mischung.

2. Verfahren nach Anspruch 1, **dadurch gekennzeichnet, dass** die einwandigen Kohlenstoffnanoröhrchen gemäß b) in Form einer Suspension in einem Lösungsmittel, bevorzugt in einem aprotischen polaren Lösungsmittel, besonders bevorzugt Propylenglykol, vorliegen oder dass die einwandigen Kohlenstoffnanoröhrchen gemäß b) in Form einer Suspension in einem Lösungsmittel, bevorzugt in einem aprotischen polaren Lösungsmittel, besonders bevorzugt Propylenglykol, in Schritt e) eingesetzt werden.

3. Verfahren nach Anspruch 1 oder 2, **dadurch gekennzeichnet, dass** die einwandigen Kohlenstoffnanoröhrchen gemäß b) über eine durchschnittliche Länge, insbesondere absolute Länge, im Bereich von 1 bis 50 µm, bevorzugt 2 bis 40 µm, verfügen.

4. Verfahren nach einem der vorangehenden Ansprüche, **dadurch gekennzeichnet, dass**
die einwandigen Kohlenstoffnanoröhrchen gemäß b) über einen durchschnittlichen Durchmesser, insbesondere einen absoluten Durchmesser, von weniger als 10 nm, bevorzugt weniger als 6 nm und besonders bevorzugt im Bereich von 0,2 bis 5 nm, verfügen.

5. Verfahren nach einem der vorangehenden Ansprüche, **dadurch gekennzeichnet, dass**
die einwandigen Kohlenstoffnanoröhrchen gemäß b) über eine Dichte im Bereich von 1,0 bis 2,0 g/cm³, insbesondere im Bereich von 1,3 bis 1,4 g/cm³, verfügen.

6. Verfahren nach einem der vorangehenden Ansprüche, **dadurch gekennzeichnet, dass**
das mindestens eine Epoxidharz der ersten Menge an Epoxidharz gemäß a) ein, insbesondere flüssiges, Bisphenol A Epoxidharz umfasst oder darstellt.

7. Verfahren nach einem der vorangehenden Ansprüche, **dadurch gekennzeichnet, dass**
das der erste Teil der ersten Menge an dem mindestens einen Epoxidharz gemäß a) eine Menge im Bereich von 30 bis 70 Gew.-%, bevorzugt 40 bis 60 Gew.-%, der ersten Menge an dem mindestens einen Epoxidharz gemäß a) darstellt und/oder, insbesondere und, dass der verbliebene Teil der ersten Menge an dem mindestens einen Epoxidharz gemäß a) eine Menge im Bereich von 30 bis 70 Gew.-%, bevorzugt 40 bis 60 Gew.-%, der ersten Menge an dem mindestens einen Epoxidharz gemäß a) darstellt.

8. Verfahren nach einem der vorangehenden Ansprüche, **dadurch gekennzeichnet, dass**
die Dissolverscheibe in Schritt e) in die in dem Mischbehälter gemäß c) vorliegende Mischung aus dem Epoxidharz gemäß a) und der Menge an einwandigen Kohlenstoffnanoröhrchen gemäß b) eingeführt wird.

9. Verfahren nach einem der vorangehenden Ansprüche, **dadurch gekennzeichnet, dass**
während des Mischens gemäß Schritt e) ein Teil der Mischung aus den Komponenten a) und b) dem Mischbehälter gemäß c) entnommen und anschließend, vollständig oder in Teilen, wieder zu der im Mischbehälter verbliebenen Menge an Mischung aus den Komponenten a) und b) vor Beendigung des Mischens zugegeben wird.

10. Verfahren nach einem der vorangehenden Ansprüche, ferner umfassend
h) Zurverfügungstellung einer zweiten Menge an mindestens einem Epoxidharz,
i) Vermischen, insbesondere homogenisierendes Vermischen, des Epoxidharzes gemäß h) mit mindestens einem Netz- und Dispergiermittel und mindestens einem Pigment und/oder mindestens einem Füllstoff sowie gegebenenfalls mindestens einem Koaleszensmittel, mindestens einen Reaktivverdünner und/oder mindestens einem Additiv, insbesondere mindestens einem Entschäumer, insbesondere mit einem Dissolver unter Einsatz einer Dissolverscheibe, in einem Mischbehälter, insbesondere für eine Dauer im Bereich von 10,0 bis 20,0 min, besonders bevorzugt im Bereich von 12,0 bis 17,0 min.
j) das Vermengen der Mischung erhalten gemäß Schritt f) oder g) mit der Mischung erhalten gemäß Schritt h) in einem Mischbehälter und Mischen der Mischung erhalten gemäß Schritt f) oder g) mit der Mischung erhalten gemäß Schritt h), insbesondere Homogenisieren der Mischung enthaltend die Mischung erhalten gemäß Schritt f) oder g) mit der Mischung erhalten gemäß Schritt h), mit einem Dissolver unter Einsatz einer Dissolverscheibe in dem Mischbehälter, insbesondere für eine Dauer im Bereich von 6,0 bis 14,0 min, besonders bevorzugt im Bereich von 8,0 bis 12,0 min, wobei die Dissolverscheibe eine Drehzahl im Bereich von 1 bis 8 m/s, bevorzugt im Bereich von 2 bis 6 m/s und besonders bevorzugt im Bereich von 3 bis 5 m/s, aufweist, und
k) gegebenenfalls Isolieren der gemäß Schritt j) erhaltenen Mischung.

11. Verfahren nach Anspruch 10, **dadurch gekennzeichnet, dass** die Mischung erhalten gemäß Schritt f) oder g) zu der in dem Mischbehälter vorliegenden Mischung erhalten gemäß Schritt h) gegeben wird.

12. Verfahren nach Anspruch 11, **dadurch gekennzeichnet, dass** bei der Zugabe der Mischung erhalten gemäß Schritt f) oder g) zu der in dem Mischbehälter vorliegenden Mischung erhalten gemäß Schritt h) die Dissolverscheibe des Dissolvers sich nicht dreht.

13. Verfahren nach einem der Ansprüche 10 bis 12, **dadurch gekennzeichnet, dass** das mindestens eine Epoxidharz der zweiten Menge an Epoxidharz gemäß h) ein, insbesondere flüssiges, Bisphenol A Epoxidharz umfasst oder darstellt.

14. Verfahren nach einem der Ansprüche 10 bis 13, ferner umfassend
l) Zurverfügungstellung einer dritten Menge an mindestens einem Epoxidharz und
m) Zusammengeben der dritten Menge an dem mindestens einen Epoxidharz gemäß 1) mit der Mischung erhalten gemäß Schritt j) oder k) in einem Mischbehälter und Mischen der dritten Menge an dem mindestens einen Epoxidharz gemäß 1) und der Mischung erhalten gemäß Schritt j) oder k), insbesondere Homogenisieren der Mischung enthaltend die dritte Menge an dem mindestens einen Epoxidharz gemäß 1) und die Mischung erhalten gemäß Schritt j) oder k), mit einem Dissolver unter Einsatz einer Dissolverscheibe in dem Mischbehälter, insbesondere für eine Dauer im Bereich von 6,0 bis 14,0 min, besonders bevorzugt im Bereich von 8,0 bis 12,0 min, wobei die Dissolverscheibe eine Drehzahl im Bereich von 0,5 bis 6 m/s, bevorzugt im Bereich von 1 bis 5 m/s und besonders bevorzugt im Bereich von 2 bis 4 m/s, aufweist, und
n) Isolieren der gemäß Schritt m) erhaltenen Mischung.

15. Verfahren nach Anspruch 14, **dadurch gekennzeichnet, dass** das mindestens eine Epoxidharz der dritten Menge an Epoxidharz gemäß 1) ein, insbesondere flüssiges, Bisphenol F Epoxidharz umfasst oder darstellt.

16. Verfahren nach Anspruch 15, **dadurch gekennzeichnet, dass** man 75 bis 95 Gew.-%, bevorzugt 80 bis 90 Gew.-%, Bisphenol A Epoxidharz gemäß a) und/oder h) und 5 bis 25 Gew.-%, bevorzugt 10 bis 20 Gew.-%, Bisphenol F Epoxidharz gemäß 1), jeweils bezogen auf die Gesamtmenge Bisphenol A Epoxidharz und Bisphenol F Epoxidharz, einsetzt.

17. Verfahren nach einem der Ansprüche 14 bis 16, **dadurch gekennzeichnet, dass** in Schritt m) ebenfalls mindestens ein Koaleszensmittel und/oder mindestens ein Reaktivverdünner in die Mischung eingearbeitet werden.

18. Verfahren nach einem der Ansprüche 14 bis 17, **dadurch gekennzeichnet, dass** während des Mischens gemäß Schritt m) ein Teil der Mischung dem Mischbehälter entnommen und anschließend, vollständig oder in Teilen, wieder zu der im Mischbehälter verbliebenen Menge an der Mischung vor Beendigung des Mischens wieder zugegeben wird.

19. Verfahren zur Herstellung einer Beschichtungszusammensetzung, insbesondere einer Beschichtungszusammensetzung zur Beschichtung von Bodenflächen, umfassend die Schritte
1) Zurverfügungstellung einer Mischung erhalten gemäß Schritt j), k) oder n), insbesondere n), des Verfahrens gemäß einem der Ansprüche 10 bis 18, insbesondere gemäß einem der Ansprüche 14 bis 18,
2) Zurverfügungstellung eines Härters, insbesondere Amin-Härters, und
3) Mischen der Komponenten 1) und 2) unter Ausbildung einer Beschichtungszusammensetzung.

20. Verfahren zur Herstellung einer Beschichtung, umfassend die Schritte Auftragen der gemäß Schritt 3) des Verfahrens nach Anspruch 19 erhaltenen Beschichtungszusammensetzung auf eine Substratoberfläche unter Ausbildung eines Schichtauftrags und Aushärten der Beschichtungszusammensetzung.

21. Verfahren nach Anspruch 20, **dadurch gekennzeichnet, dass** der Schichtauftrag selbstnivellierend ist.

22. Beschichtung erhalten gemäß dem Verfahren nach Anspruch 21 oder 22, insbesondere nach Anspruch 21, **gekennzeichnet durch**
i) einen Helligkeitswert im Bereich von 1 bis 80, bevorzugt im Bereich von 3 bis 70 und besonders bevorzugt im Bereich von 5 bis 60, bestimmt gemäß Farbtonmessung nach CIELab,
ii) einen Erdableitwiderstand Rg < 10⁹ Ω und eine Personenaufladung < 100 V, bestimmt gemäß DIN EN 61340-5-1 (VDE 0300-5-1):2017-07, und/oder, insbesondere und,
iii) einen Gehalt an einwandigen Kohlenstoffnanoröhrchen im Bereich von 3x10⁻³ bis 2,5x10⁻² Gew.-%, bevorzugt im Bereich von 4x10⁻³ bis 1,5x10² Gew.-% und besonders bevorzugt im Bereich von 5x10⁻³ bis 9x10⁻³ Gew.-%, bezogen auf das Gesamtgewicht der Beschichtung.

23. Beschichtung nach Anspruch 22, **dadurch gekennzeichnet, dass** diese eine Schichtstärke im Bereich von 0,5 bis 2,0 mm aufweist.
